# EUROPÄISCHE PATENTSCHRIFT

(11) **EP 3 180 184 B1**
(45) Veröffentlichungstag und Bekanntmachung des Hinweises auf die Patenterteilung: **07.04.2021**
(21) Anmeldenummer: 15748173.0
(22) Anmeldetag: 28.07.2015
(51) Int. Cl.: B29C 70/54, B29C 70/44

(54) **HARZLEITUNG MIT FLIESSHILFE**
RESIN LINE WITH FLOW AID
CONDUITE POUR RÉSINE AVEC AIDE À L'ÉCOULEMENT

(30) Priorität: 12.08.2014 DE 102014011787
(43) Veröffentlichungstag der Anmeldung: 21.06.2017
(73) Patentinhaber: Faserverbund Innovations UG (haftungsbeschränkt), 49477 Ibbenbüren (DE)
(72) Erfinder: DIERKES, Dominik, 49477 Ibbenbüren (DE)
(74) Vertreter: Busse & Busse
(86) Internationale Anmeldenummer: PCT/EP2015/001549
(87) Internationale Veröffentlichungsnummer: WO 2016/023618

(56) Entgegenhaltungen:
- US-A1- 2008 079 193

## Beschreibung

Die vorliegende Erfindung bezieht sich auf eine Harzleitung nach dem Oberbegriff des Anspruchs 1.

Aus dem Stand der Technik ist eine Harzleitung bekannt, die im Vakuuminfusionsverfahren eingesetzt wird, um damit in ein luftdicht verschlossenes Infusionswerkzeug Matrixmaterial einzuleiten. Um dem Austritt des Matrixmaterials aus der Harzleitung und dessen Eindringen und Ausbreiten im Infusionswerkzeug zu fördern, ist die Harzleitung mit einer Fließhilfe umhüllt. Beim Einsatz der Harzleitungen hat es sich jedoch als nachteilig herausgestellt, dass sich die Form der Harzleitung als Eindruck in der Oberfläche des fertigen Laminats abzeichnet, da die Abdichtungsfolie die Harzleitung durch das Vakuum auf das Bauteil zieht. Zudem ist die Kontaktfläche der Harzleitung mit der Fließhilfe zum Innenraum des Werkzeugs hin unter Vakuumeinfluss sehr gering, über die Matrixmaterial in den Werkzeuginnenraum hineinlaufen kann. Dadurch wird der Eintritt des Matrixmaterials in den Innenraum sowie dessen Verteilung verzögert.

Aus der Schrift US2008/0079193 A1 ist eine gattungsgemäße Harzleitung bekannt, bei der ein Steg ausgebildet ist, um die Harzleitung von der Oberfläche des Laminats auf Abstand zu halten. Das Material der Fließhilfe, aus dem der Steg gebildet ist, ist aber zu schwach, um die Harzleitung ausreichend fest gegen das Laminat abzustützen.

Es ist die Aufgabe der vorliegenden Erfindung, die Harzleitung so auszugestalten, dass sie unter Vakuumeinfluss keine Abdrücke in der Oberfläche des Bauteils hinterlässt und die Harzabgabe verbessert wird.

Die Aufgabe wird für eine gattungsgemäße Harzleitung durch die Merkmale des Anspruchs 1 gelöst.

Mit dem Begriff des Steges ist ein Abschnitt gemeint, in dem die Lappen des Fließhilfe-Materials über dessen Höhe aufeinander liegend gehalten sind. Zur Ausbildung eines Stegs genügt es nicht, dass die Lappen durch nur eine in Längsrichtung der Harzleitung verlaufende Naht miteinander verbunden sind. Über die Länge des Stegs gesehen sind die Lappen an zumindest zwei voneinander beabstandeten Stellen miteinander verbunden. Die Verbindungen können durch eine Naht, einen Kleber, eine Schweißverbindung, eine Klammer, einen Niet, eine Vernadelung der Fasern des Fließhilfe-Materials, einen Klettverschluss oder auf sonstige Weise miteinander verbunden sein.

Durch den doppellagigen Steg wird die Harzleitung auf Abstand zur Oberfläche des zu bildenden Bauteils gehalten. Da der Steg nur vom Material des Fließhilfe-Materials gebildet ist, ist der Steg sehr dünn. Unter der Einwirkung des Vakuums legt sich die Abdichtungsfolie seitlich an den Steg an, so dass die Harzleitung auch unter einwirkendem Vakuum nicht auf die Bauteiloberfläche gezogen wird. Durch die Ausbildung des Stegs mit einem doppellagigen Fließhilfe-Material ist dieser aber noch ausreichend dick, um das Matrixmaterial auch unter Vakuum-Einfluss ausreichend schnell aus der Harzleitung in das Werkzeug abfließen zu lassen. Das Fließhilfe-Material wirkt auf diese Weise als eine Art Abstandsgewirk, das ein Abkneifen des Zuflussspaltes für das Matrixmaterial durch die Abdichtfolie unter Vakuum verhindert. Die Harzleitung mit dem erfindungsgemäßen Steg kann einfach auf das Werkzeug aufgelegt werden, eine besondere Ausrichtung und/oder Fixierung ist nicht erforderlich.

Die Harzleitung kann als ein flexibler Spiralschlauch ausgebildet sein, wobei der spiralförmig verlaufende Schnitt im Material der Spiralleitung die umfangseitige Öffnung ausbildet, es können aber auch andere Schlauchformen mit anders ausgebildeten Öffnungen verwendet werden. Das Fließhilfe-Material kann beispielsweise ein Vliesmaterial oder ein Netzmaterial sein.

An den Steg schließt sich an seinem von der Harzleitung abgewandten Ende ein dazu abgewinkelter Abschnitt an. Der abgewinkelte Abschnitt bildet im Verhältnis zum Steg eine Stützfläche, mit der die Harzleitung mit dem Steg in einem Werkzeug ohne einen zusätzlichen Positionierungs- und Fixierungsaufwand aufgestellt werden kann. Durch den abgewinkelten Abschnitt steht die Harzleitung noch sicherer im Werkzeug auf und kippt nicht so leicht um, wenn die Abdichtungsfolie oder andere Schichten auf das Werkzeug aufgelegt werden. Der abgewinkelte Abschnitt kann bevorzugt etwa 90° zum Steg angewinkelt sein. Der Steg steht dadurch vertikal oder zumindest annähernd vertikal auf der Werkzeugoberfläche auf und ermöglicht so einen guten Harzdurchfluss. Um den Harzdurchfluss nicht zu stören, ist der abgewinkelte Abschnitt matrixmaterialdurchlässig ausgebildet. Das der Harzleitung abgewandte Ende des Stegs bildet eine Art Mündungsöffnung für das hindurch fließende Matrixmaterial, das über diese Mündungsöffnung gut in das Werkzeug abfließen kann. Der abgewinkelte Abschnitt kann ganz oder teilweise aus dem Fließhilfe-Material gebildet sein. Wenn der abgewinkelte Abschnitt nur aus dem Fließhilfe-Material gebildet ist, kann darauf verzichtet werden, zusätzliches Material an dem Steg zu befestigen. Ansonsten ist es erforderlich, an den Steg oder an überlappende Teile zusätzliches Material anzubringen, wobei dazu die vorgenannten Verbindungstechniken verwendet werden können. Der zusätzliche abgewinkelte Abschnitt kann dazu beitragen, im Matrixmaterial transportierte Luftbläschen zurück zu halten.

Einer oder beide Lappen sind in einem sich an den Steg anschließenden Abschnitt in eine oder zwei Schlaufen gelegt, die den abgewinkelten Abschnitt ausbilden. Durch eine oder zwei aus den überstehenden Lappen des Fließhilfe-Materials gebildete Schlaufen ergibt sich eine gute Abstützung, ohne dass zusätzliches Material an den Lappen befestigt werden muss.

Nach einer Ausgestaltung der Erfindung weisen die Enden der Lappen einen Abstand zueinander auf und bilden einen Spalt zwischen sich aus. Durch den frei bleibenden Spalt zwischen den Enden der Lappen kann das Matrixmaterial besser aus dem Harzschlauch in das Werkzeug abfließen.

Nach einer Ausgestaltung der Erfindung ist der abgewinkelte Abschnitt durch ein mit dem abgewinkelten Abschnitt verbundenes Stützmaterial versteift. Durch ein Stützmaterial ergibt sich eine verbesserte Abstützung. Das Stützmaterial kann zudem das Abfließen des Matrixmaterials sowie dessen Breitverteilung unterstützen. Das Stützmaterial kann beispielsweise ein Klettpad sein, das leicht mit dem Fließhilfe-Material verbindbar ist.

Nach einer Ausgestaltung der Erfindung ist das Stützmaterial in die Schlaufe oder die Schlaufen eingelegt. Dadurch ergibt sich eine besondere Festigkeit der abgewinkelten Abschnitte. Wenn das Stützmaterial einteilig die Schlaufen miteinander verbindet, ergibt sich eine besonders gut Abstützung und eine flache Abstützfläche.

Nach einer Ausgestaltung der Erfindung sind die Lappen des Fließhilfe-Materials durch zumindest zwei voneinander beabstandete Nähte zu einem Steg miteinander verbunden. Nähte können schnell und kostengünstig hergestellt werden. Das Nahtmaterial behindert den Durchfluss des Matrixmaterials auch nur unwesentlich.

Nach einer Ausgestaltung der Erfindung ist auf das Fließhilfe-Material noch zusätzlich ein Abreißgewebe aufgelegt. Durch das Abreißgewebe ist es einfacher möglich, die Harzleitung nach Herstellung des Bauteils wieder zu entfernen. Das Abreißgewebe wird bevorzugt auf die Außenseite des Fließhilfe-Materials aufgelegt. Das Abreißgewebe kann vollflächig auf das Fließhilfe-Material aufgelegt sein, es ist aber auch möglich, dieses nur in Teilbereichen dort auf das Fließhilfe-Material aufzulegen, wo eine leichtere Trennbarkeit gewünscht ist.

Es wird darauf hingewiesen, dass jede der vorstehend beschriebenen Ausgestaltungen der Erfindung für sich, aber auch in einer beliebigen Kombination untereinander mit der Ausführung gemäß dem Gegenstand des Hauptanspruches kombiniert werden kann, soweit dem keine technisch zwingenden Hindernisse entgegenstehen.

Weitere Abwandlungen und Ausgestaltungen der Erfindung lassen sich der nachfolgenden gegenständlichen Beschreibung entnehmen.

Die Erfindung wird nun anhand eines Ausführungsbeispiels näher beschrieben. In der beigefügten Darstellung ist eine Harzleitung 2 gezeigt, durch die ein Matrixmaterial hindurchgeleitet wird. Durch zeichnerisch nicht näher dargestellte Öffnungen kann das Matrixmaterial aus dem inneren der Harzleitung 2 heraus nach außen dringen. Dort gerät es in Kontakt mit dem Fließhilfematerial 4, das als Hülle um die Harzleitung 2 herumgelegt ist.

Das Fließhilfematerial 4 ist so dimensioniert, dass über den Umfang der Harzleitung 2 hinaus Lappen 8 über den Umfang der Harzleitung 2 hervorstehen, die in einem Abschnitt einen doppellagigen Steg 6 ausbilden. Die beiden überstehenden Lappen 8 des Fließhilfematerials 4 sind im Bereich des Stegs 6 durch zwei angedeutete Nähte 10 miteinander verbunden.

An dem von der Harzleitung 2 abgewandten Ende des Steges 6 befindet sich ein dazu abgewinkelter Abschnitt 12. Im Ausführungsbeispiel besteht der abgewinkelte Abschnitt 12 aus zwei Schlaufen 14, in die die beiden Enden der Lappen 8 gelegt sind. Die beiden Schlaufen 14 sind im Ausführungsbeispiel ebenfalls durch Nähte 10 fixiert. Die Enden der Lappen 8 sind bei den Schlaufen 14 so gelegt, dass sie einen Abstand zueinander aufweisen und ein Spalt 16 zwischen den beiden Enden frei bleibt.

Im Ausführungsbeispiel ist in die Schlaufen 14 eine Lage eines Stützmaterials 18 eingelegt. Das Stützmaterial sollte für das Matrixhilfsmaterial durchlässig sein, damit dieses beim Auslaufen aus der Harzleitung 2 in das Werkzeug hinein nicht behindert wird.

Das vorstehend beschriebene Ausführungsbeispiel dient nur der Erläuterung der Erfindung. Die Erfindung ist keineswegs auf das Ausführungsbeispiel beschränkt. Dem Fachmann bereitet es keine Schwierigkeiten, das Ausführungsbeispiel auf eine ihm als geeignet erscheinende Weise abzuwandeln, um es an einen konkreten Anwendungsfall anzupassen.

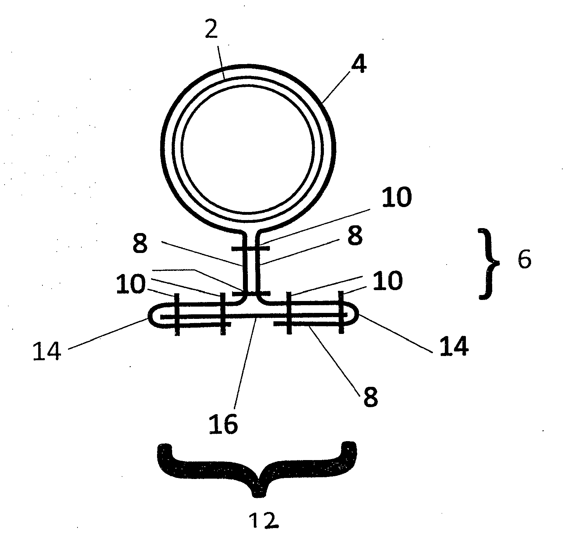

## Patentansprüche

1. Harzleitung (2) mit umfangseitigen Öffnungen und einer Hülle aus einem Fließhilfe-Material (4), bei der das Fließhilfe-Material (4) so um die Harzleitung (2) gelegt ist, dass die über die Harzleitung (2) überstehenden Lappen (8) des Fließhilfe-Materials (4) einen doppellagigen Steg (6) ausbilden, in dessen Bereich die Lappen (8) miteinander verbunden sind, und sich an den Steg (6) an dem von der Harzleitung (2) abgewandten Ende ein dazu abgewinkelter Abschnitt (12) anschließt, **dadurch gekennzeichnet, dass** einer oder beide Lappen (8) in einem sich an den Steg (6) anschließenden Abschnitt in eine oder zwei Schlaufen (14) gelegt sind, die den oder die abgewinkelten Abschnitte (12) ausbilden.

2. Harzleitung (2) nach Anspruch 1, **dadurch gekennzeichnet, dass** die Schlaufen (14) so gelegt sind, dass die Enden der Lappen (8) einen Abstand zueinander aufweisen und einen Spalt (16) zwischen sich ausbilden.

3. Harzleitung (2) nach einem der vorhergehenden Ansprüche, **dadurch gekennzeichnet, dass** der abgewinkelte Abschnitt (12) durch ein mit dem abgewinkelten Abschnitt (12) verbundenes Stützmaterial (18) versteift ist.

4. Harzleitung (2) nach einem der vorhergehenden Ansprüche 4 und 5, **dadurch gekennzeichnet, dass** das Stützmaterial (18) in die Schlaufe oder die Schlaufen (14) eingelegt ist.

5. Harzleitung (2) nach einem der vorhergehenden Ansprüche, **dadurch gekennzeichnet, dass** die Lappen (8) des Fließhilfe-Materials (4) durch zumindest zwei voneinander beabstandete Nähte (10) zu einem Steg (6) miteinander verbunden sind.

6. Harzleitung (2) nach einem der vorhergehenden Ansprüche, **dadurch gekennzeichnet, dass** auf das Fließhilfe-Material (4) noch zusätzlich ein Abreißgewebe aufgelegt ist.

## Claims

1. Resin line (2) with circumferential-side openings and an enveloping made of flow aid material (4), in which the flow aid material (4) is placed around the resin line (2) such that the tabs (8) of the flow aid material (4) projecting over the resin line (2) form a double-layer web (6) in the region of which the tabs (8) are connected to one another and adjoining the web (6) at the end facing away from the resin line (2) is a section (12) angled for such purpose, **characterised in that** one or both tabs (8) in a section adjoining the web (6) are placed in one or two loops (14) which form the angled section/s (12).

2. Resin line (2) according to claim 1, **characterised in that** the loops (14) are placed such that the ends of the tabs (8) have a spacing in relation to one another and form a gap (16) between them.

3. Resin line (2) according to any one of the preceding claims, **characterised in that** the angled section (12) is stiffened by a support material (18) connected to the angled section (12).

4. Resin line (2) according to any one of the preceding claims 4 and 5, **characterised in that** the support material (18) is laid into the loop or the loops (14).

5. Resin line (2) according to any one of the preceding claims, **characterised in that** the tabs (8) of the flow aid material (4) are connected to one another by at least two seams (10) spaced apart from one another to form a web (6).

6. Resin line (2) according to any one of the preceding claims, **characterised in that** a tear-off fabric is also placed onto the flow aid material (4).

## Revendications

1. Conduit de résine (2) comprenant des ouvertures sur la circonférence et une enveloppe composée en matériau favorisant l'écoulement (4), dans lequel le matériau favorisant l'écoulement (4) est placé autour du conduit de résine (2) de telle sorte que les languettes (8) du matériau favorisant l'écoulement (4) qui font saillie au-dessus du conduit de résine (2) forment un pont à deux couches (6) où, dans cette zone, les languettes (8) sont reliées l'une à l'autre, et au niveau du pont (6) se raccorde une partie coudée au niveau de l'extrémité opposée au conduit de résine (2), **caractérisé en ce qu'**une ou les deux languettes (8) sont placées dans une partie raccordée au pont (6) dans une ou deux boucles (14) qui forment la ou les partie(s) coudée(s) (12).

2. Conduit de résine (2) selon la revendication 3, **caractérisé en ce que** les boucles (14) sont placées de telle sorte que les extrémités des languettes (8) présentent une distance l'une par rapport à l'autre et forment une fente (16) entre elles.

3. Conduit de résine (2) selon une des revendications précédentes, **caractérisé en ce que** la partie coudée (12) est durcie par un matériau de support (18) relié à la partie coudée (12) .

4. Conduit de résine (2) selon une des revendications précédentes 4 et 5, **caractérisé en ce que** le matériau de support (18) est inséré dans la boucle ou les boucles (14).

5. Conduit de résine (2) selon une des revendications précédentes, **caractérisé en ce que** les languettes (8) du matériau favorisant l'écoulement (4) sont reliées l'une à l'autre par au moins deux coutures (10) distantes l'un de l'autre par rapport à un pont (6).

6. Conduit de résine (2) selon une des revendications précédentes, **caractérisé en ce que** sur le matériau favorisant l'écoulement (4) est appliqué en outre un tissu d'arrachage.
